# FASCICULE DE BREVET EUROPEEN

(11) **EP 2 066 843 B1**
(45) Date de publication et mention de la délivrance du brevet: **12.05.2010**
(21) Numéro de dépôt: 07823501.7
(22) Date de dépôt: 13.09.2007
(51) Int. Cl.: E02B 3/06, F03B 13/14

(54) **INSTALLATION ET PROCEDE POUR L'AMORTISSEMENT ET/OU LA RECUPERATION DE L'ENERGIE DE LA HOULE**
ANLAGE UND VERFAHREN ZUR DÄMPFUNG UND/ODER GEWINNUNG DER ENERGIE AUS DEM WELLENGANG
PLANT AND METHOD FOR DAMPING AND/OR RECOVERING THE ENERGY OF THE SWELL

(30) Priorité: 27.09.2006 FR 0608450
(43) Date de publication de la demande: 10.06.2009
(73) Titulaire: ACRI IN SAS, 06410 Biot (FR)
(72) Inventeur: GUEVEL, Pierre, 06410 Biot (FR)
(74) Mandataire: Macquet, Christophe
(86) Numéro de dépôt international: PCT/FR2007/001475
(87) Numéro de publication internationale: WO 2008/037866

(56) Documents cités:
- WO-A-00/28151
- FR-A- 567 355
- GB-A- 191 107 087
- US-A- 4 145 882

## Description

L'invention concerne une installation et un procédé pour l'amortissement et/ou la récupération de l'énergie de la houle.

L'état de la technique divulgue un grand nombre d'installations et de procédés destinés à récupérer les énergies marines et, notamment, l'énergie des vagues elles-mêmes. Le document WO 00/28151 est considéré comme le document décrivant l'état de la technique antérieure le plus proche.

La plupart de ces installations sont positionnées à distance de la côte, en pratique, dans des lieux éloignés de celle-ci, où les vagues sont formées. On peut citer par exemple les installations réalisées par la Société Wave Dragon ApS (TM), qui proposent de récupérer les eaux amenées par les vagues dans un réservoir flottant situé au-dessus du niveau moyen de la mer. Les eaux ainsi récupérées s'écoulent au travers d'une turbine pour la récupération de l'énergie desdites vagues. On peut en outre citer, dans un autre exemple, les installations du type IPS-OWEC (TM) de la Société Interproject Service AB (TM) où l'énergie des vagues est transformée en énergie mécanique au moyen d'un piston mobile en translation au sein d'un tube vertical disposé sous une bouée en surface. On peut encore citer les installations Pelamis (TM) de la Société OPD Ltd.(TM), constituées par des cylindres flottants articulés et déplacés par les vagues.
On peut finalement citer les installations dites CETO (TM) de la Société Seapower Pacific Pty Ltd. (TM), qui proposent d'utiliser l'énergie des vagues pour actionner un disque maintenu à une extrémité d'un bras mobile, ledit bras actionnant deux pompes déplaçant de l'eau au travers de tubes, le déplacement de cette eau entraînant une turbine en rotation pour la récupération de l'énergie.

D'autres installations sont par contre destinées à être mises en place sur la côte. On citera par exemple les systèmes à colonne d'eau oscillante dans lesquels une colonne d'eau oscille dans un conduit de béton, une turbine auto-rectifiante étant disposée en partie haute dudit conduit de manière à convertir le mouvement de l'air poussé par l'eau en énergie.

Les installations de l'état de la technique présentent de multiples inconvénients. Elles sont pour la plupart mises en oeuvre en surface et sont ainsi exposées aux dégradations liées aux tempêtes et présentent un risque pour la navigation. Aussi, une bonne tenue à la mer doit être prise en compte, ce qui grève les coûts de construction et de maintenance associés à ces installations. D'ailleurs, en pratique, les coûts de production de l'énergie des vagues restent élevés par rapport aux coûts associés à la production d'énergie éolienne et aux énergies fossiles. En outre, ces installations apparentes dénaturent bien souvent le paysage.

Aussi, et compte tenu de l'état de la technique précité, le problème que se propose de résoudre l'invention est de réaliser une installation pour la récupération et/ou l'amortissement de l'énergie de la houle, c'est-à-dire du mouvement ondulatoire des vagues, qui soit entièrement novateur, et qui permette d'amortir l'énergie de la houle et/ou de générer une énergie à des coûts compétitifs sans que ladite installation soit cependant soumise aux diverses dégradations et dénature le paysage.

La solution proposée par l'invention vis-à-vis du problème posé a pour premier objet une installation pour l'amortissement et/ou la récupération de l'énergie de la houle, caractérisée en ce qu'elle comprend un dispositif positionné à une profondeur donnée dans un milieu marin, devant un ouvrage apte à réfléchir une houle incidente et ainsi former une houle réfléchie, la superposition desdites houles incidente et réfléchie formant un clapotis, ledit dispositif comportant une partie oscillante apte à osciller en fonction des variations de pression induites par ledit clapotis, ladite partie oscillante étant positionnée dans une zone d'influence dudit clapotis.

Elle a pour second objet un procédé pour l'amortissement et/ou la récupération de l'énergie de la houle, caractérisé en ce qu'il comporte des étapes de : - positionnement d'un dispositif à une profondeur donnée dans un milieu marin et devant un ouvrage apte à réfléchir une houle incidente ; - réflexion de la houle incidente par l'ouvrage de manière à former une houle réfléchie, la superposition desdites houle incidente et réfléchie formant un clapotis ; - positionnement d'une partie oscillante du dispositif de récupération de l'énergie dans une zone d'influence du clapotis ; et de - oscillation de ladite partie oscillante du dispositif en fonction des variations de pression induites par ledit clapotis.

Elle a pour troisième objet l'utilisation d'une installation telle que ci-dessus, pour l'amortissement et/ou la récupération de l'énergie formée par un clapotis généré par la réflexion d'une houle incidente sur un ouvrage.

Ainsi, l'ouvrage réfléchit la houle incidente, c'est-à-dire les mouvements ondulatoires des vagues incidentes. La houle réfléchie se superpose à la houle incidente est forme un clapotis. Les variations de pressions engendrées par ce clapotis, telles qu'appliquées au dispositif selon l'invention, sont à l'origine d'une oscillation de la partie oscillante dudit dispositif. L'énergie provenant de la superposition des houles incidente et réfléchie est ainsi récupérée. Elle peut alors faire l'objet d'une transformation en énergie notamment électrique.

De manière avantageuse : - la partie oscillante du dispositif comprend un plateau oscillant en translation verticale et l'élément élastique est un gaz tel que de l'air sensiblement en équipression avec la pression du milieu marin à la profondeur à laquelle est positionnée le dispositif ; - l'ouvrage est un ouvrage côtier et le dispositif est positionné à proximité dudit ouvrage, au fond de la mer ; - le dispositif comporte en outre une partie fixe, ladite partie fixe et la partie oscillante formant une cuve contenant un corps présentant des propriétés élastiques et étant apte à se déformer en fonction des oscillations de la partie oscillante du dispositif, sous l'effet des variations de pression induites par le clapotis ; - le dispositif est un dispositif de récupération de l'énergie de la houle et ladite installation comporte en outre un dispositif de transformation de l'énergie récupérée par ledit dispositif de récupération ; - le dispositif de transformation de l'énergie comprend un moteur linéaire ; et - le dispositif est un dispositif d'amortissement de l'énergie de la houle, et la partie oscillante de ce dispositif est laissée libre mécaniquement, sans qu'un moyen de freinage quelconque lui soit imposé.

L'invention sera mieux comprise à la lecture de la description non limitative qui va suivre, rédigée au regard des dessins annexés, dans lesquels :
- la figure 1 présente, de manière schématique, une installation selon l'invention ;
- la figure 2 présente, de manière schématique, en coupe transversale, un dispositif de récupération de l'énergie d'une installation selon l'invention ; et
- les figures 3A et 3B montrent, respectivement, une courbe de mesure des variations de la hauteur d'eau d'un clapotis généré par une houle incidente dans un canal en fonction du temps, et des courbes illustrant les variations de pressions appliquées au fond dudit canal, en fonction du temps.

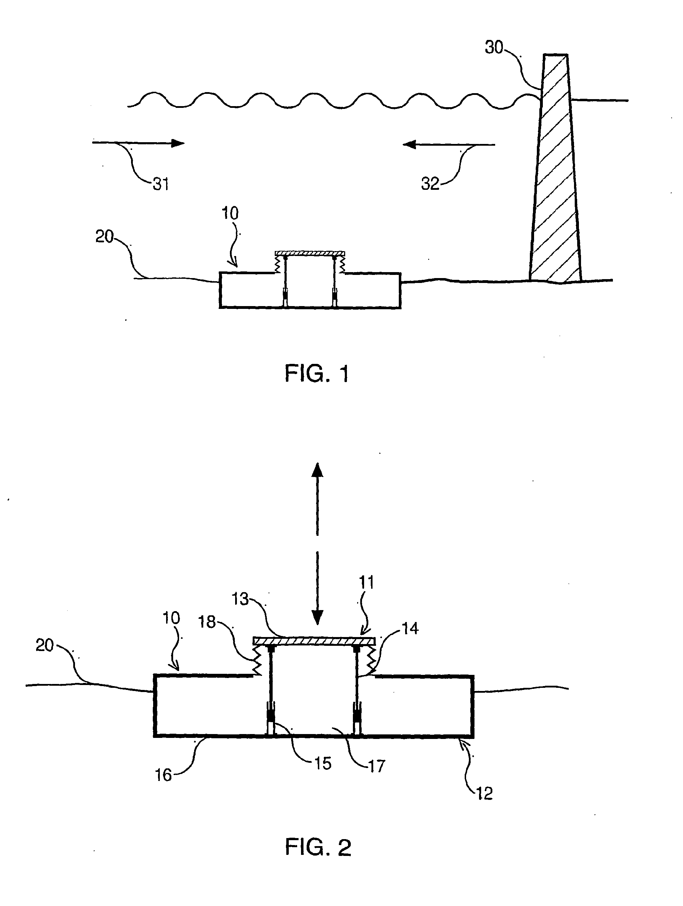

L'installation selon l'invention, telle que présentée à la figure 1, comprend un dispositif 10 de récupération de l'énergie de la houle. Ce dispositif 10 est positionné sous la surface d'un milieu marin, à une profondeur donnée dans ce milieu, au fond 20 de la mer. Ce dispositif 10 n'est par suite pas visible de la surface et ne dénature pas le paysage.

Ainsi que cela est montré à la figure 2, le dispositif 10 comprend une partie oscillante 11 et une partie fixe 12, ladite partie fixe 12 reposant sur le fond 20, la partie oscillante 11 étant en contact avec le milieu marin.

Dans un mode de réalisation préféré selon l'invention, la partie oscillante est formée d'un plateau 13 sensiblement horizontal. Ce plateau 13 est libre en translation verticale. Il est guidé par un système de guidage linéaire composé d'une pluralité de tiges 14, chaque tige étant montée coulissante dans un cylindre 15 vertical. La partie fixe 12 est par contre formée d'un boîtier 16, par exemple sensiblement parallélépipédique ou de toute autre conformation. Ce boîtier 16 est fixé au fond 20 de la mer. Il est par exemple partiellement enfoncé dans ledit fond 20. Le plateau 13 et le boîtier 16 définissent une cuve 17. L'étanchéité entre le plateau 13 et la cuve 17 est assurée par un joint 18 déformable. Selon le présent mode de réalisation préféré de l'invention, la cuve 17 contient un corps élastique tel qu'un gaz apte à se déformer en fonction des oscillations du plateau 13 et à ainsi récupérer l'énergie produite par lesdites oscillations. Ce corps est par exemple de l'air. A l'équilibre, l'air est sensiblement en équipression avec le milieu extérieur. Bien entendu, le volume de la cuve 17 est ajusté pour le type de houle le plus énergétique du site de l'installation afin d'optimiser son rendement.

Selon l'invention, le dispositif 10 est disposé devant un ouvrage 30 apte à réfléchir une houle incidente 31 et ainsi former une houle réfléchie 32. Cet ouvrage 30 est notamment un ouvrage côtier bétonné tel qu'une digue, un quai ou une jetée. Il est fortement réfléchissant. Préférentiellement, il comporte un plan qui définit la limite entre la côte et le milieu marin. Ce plan est sensiblement orthogonal à la direction de la houle incidente. En fait, lorsque les vagues qui composent la houle s'approchent de la côte, le profondeur du milieu marin se réduit et la direction de la houle tend naturellement à prendre une direction orthogonale à la côte donc au plan de l'ouvrage 30, même si ce n'est pas le cas au large.

Lorsque la houle incidente 31, venant du large, rencontre l'ouvrage 30, elle est réfléchie par ledit ouvrage 30 et une houle réfléchie 32 est formée. La direction de la houle réfléchie 32 est sensiblement identique à la direction de la houle incidente 31. Toutefois, le sens de la houle réfléchie 32 est sensiblement opposé au sens de la houle incidente. A proximité de l'ouvrage, c'est-à-dire, en pratique, jusqu'à des distances allant à environ quelques fois la longueur d'onde de la houle incidente, par exemple jusqu'à une fois cette longueur d'onde, les houles incidente 31 et réfléchie 32 se superposent et forment un clapotis visible à l'oeil nu. Ce clapotis génère des variations de pressions dans le milieu marin. Ces variations sont formées d'une succession de surpressions et de dépressions. Elles sont constatées au moins à la verticale et au-dessous de la zone de superposition et dans le voisinage immédiat de cette zone. Selon l'invention, on disposera le dispositif de récupération de l'énergie dans une zone d'influence du clapotis formé par la superposition des houles incidente et réfléchie.

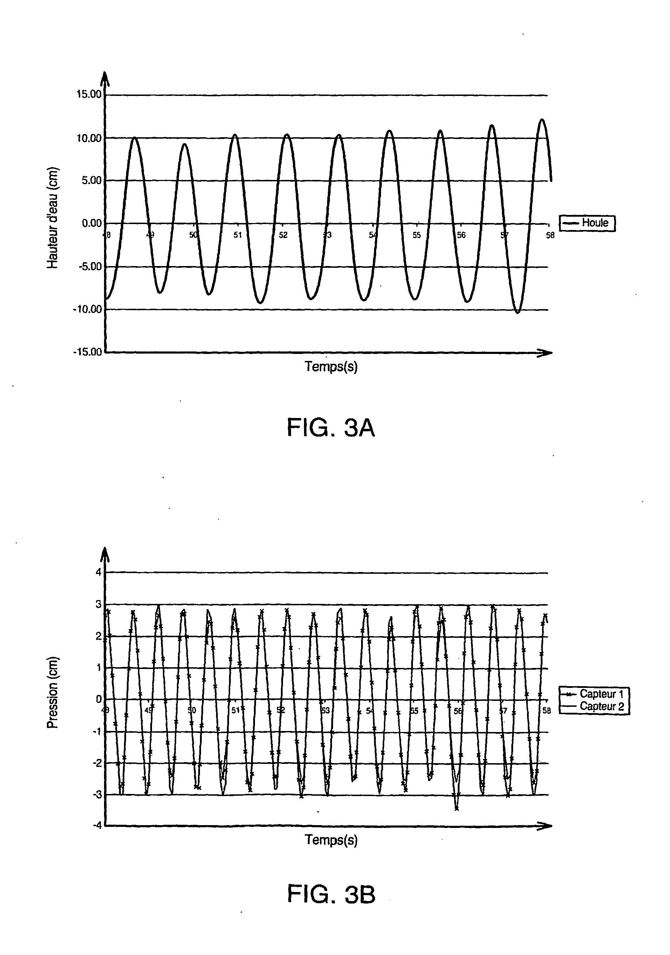

Des expériences ont été menées dans un canal d'essais afin de mieux observer le phénomène. Dans ces expériences, le canal d'essais avait une longueur d'environ 30 m, une largeur de l'ordre de 1,80 m et une profondeur de l'ordre de 1,50 m. Une houle incidente a été générée dans ce canal. La longueur d'onde de cette houle incidente était d'environ 2 m et son amplitude, de 10 cm environ. La houle incidente a fait l'objet d'une réflexion par un mur disposé dans ce canal. Il apparaît que la houle réfléchie alors formée a une longueur d'onde sensiblement égale à la longueur d'onde de la houle incidente. Le sens de la houle réfléchie est sensiblement opposé à celui de la houle incidente. La courbe présentée à la figure 3A ci-jointe représente les variations de la hauteur d'eau mesurées en un point situé en avant du mur disposé dans le canal, en fonction du temps. Il apparaît qu'en ce point, l'onde est sensiblement stationnaire. On est donc dans des conditions de clapotis. Il apparaît en outre que la longueur d'onde de ce clapotis, formé par la superposition des houles incidente et réfléchie, est égale à celle de la houle incidente (et de la houle réfléchie), soit 2 m environ. Néanmoins, l'amplitude de l'onde formant le clapotis est double de celle de l'onde incidente, soit environ 20 cm. Par ailleurs, deux capteurs de pression ont été disposés au fond du canal, au dessous du point précité, à des distances de respectivement 2 et 5 m. Il apparaît que le clapotis génère une onde de pression au fond du canal. Cette onde de pression est proportionnelle au produit des amplitudes des houles incidente et réfléchie. La fréquence de cette onde de pression est égale à deux fois celle de l'onde sensiblement stationnaire formant le clapotis. Les courbes de variation de pression pour les deux capteurs sont pratiquement superposées. La pression varie donc sensiblement de la même manière identique à 2 m et à 5 m du mur du canal. De manière surprenante, les variations de pression ne subissent pas d'atténuation sensible avec la profondeur du canal. Aussi, quel que soit le niveau de l'eau dans le canal, les variations de pression mesurées par les capteurs sont sensiblement égales.

Dans le document intitulé "A Theory of the Origin of Microseism" de M. S. Longuet-Higgings, Department of Geodesy and Geophysics, Université de Cambridge, publié le 27 septembre 1950, il est suggéré que ce phénomène est susceptible d'être à l'origine de microséismes des fonds marins. Il est confirmé que les vagues d'une houle non réfléchie génèrent des variations de pression dont l'intensité est décroît de manière exponentielle avec la profondeur mais que, dans certaines conditions la superposition d'une houle réfléchie à une houle incidente, qui forme un clapotis, est susceptible de générer des variations de pression de caractéristiques très différentes, qui ne subissent pas d'atténuation en fonction de la profondeur. C'est l'énergie de ces dernières variations de pression qui est récupérée selon l'invention.

Dans l'invention, la houle incidente, venant du large, est réfléchie par l'ouvrage lorsqu'elle atteint celui-ci. L'ouvrage étant fortement réfléchissant et la réflexion étant réalisée dans une même direction mais dans un sens sensiblement opposé à celui de la houle incidente, la houle réfléchie présente une longueur d'onde et une amplitude voisines de celles de la houle incidente. Elles se superposent donc en générant un clapotis à l'origine de variations de pression qui s'appliquent sur le dispositif 10 au fond 20 de la mer. Le plateau 13 de ce dispositif 10, soumis à ces variations de pression, oscille selon une direction verticale et transmet ces variations de pression au gaz contenu dans la cuve 17. Ce gaz se comprime donc et se détend en fonction des mouvements alternatifs du plateau 13. La succession des pressions/dépressions ainsi obtenues à l'intérieur de la cuve 17 actionne soit un moteur linéaire soit tout autre système de transformation de l'énergie notamment en énergie électrique.

Dans le cas où, selon l'invention, on souhaite uniquement amortir l'énergie de la houle incidente, la partie oscillante 13 du dispositif 10, qui constitue alors un dispositif d'amortissement de la houle, est laissée libre mécaniquement, sans qu'un moyen de freinage quelconque lui soit imposé. Sa partie oscillante 13 oscille alors librement en fonction des variations de pression qui lui sont imposées par les variations de pression induites par la superposition de la houle incidente et de la houle réfléchie.

Dans un exemple, le plateau formant la partie oscillante du dispositif de récupération de l'énergie a une longueur de 50 m, cette longueur étant mesurée dans la direction perpendiculaire au plan de l'ouvrage. En général, les houles incidentes, dont ont souhaite récupérer l'énergie, ont des longueurs d'onde comprises entre 50 et 200 m. Aussi, la plateau aura avantageusement une longueur de l'ordre de la moitié de la longueur d'onde de la houle, comprise entre 0,25 et 1 fois cette longueur d'onde. La largeur du plateau peut être quelconque. Toutefois, dans un exemple, elle sera de 20 m. Plus la surface du plateau est importante, plus la quantité d'énergie récupérable est importante. On disposera donc avantageusement des plateaux du type ci-dessus, les uns à côté des autres pour récupérer le plus d'énergie possible. La distance du centre de chaque plateau à l'ouvrage est par exemple de 100 m soit, pour une houle incidente de 100 m de longueur d'onde, une fois cette longueur d'onde. A cette distance, le clapotis est formé avec une qualité suffisante pour générer les variations de pression attendues. Quand à la profondeur, comme cela a été vu précédemment, elle peut être quelconque puisque les variations de pression que l'on cherche à récupérer ne dépendent pas de celle-ci.

On estime aujourd'hui que la quantité d'énergie récupérée par une installation selon l'invention serait supérieure à 25 % voire égale à 50 % de l'énergie contenue dans la houle incidente. Cela constitue donc un rendement particulièrement important. La récupération de cette énergie protègerait par ailleurs les ouvrages côtiers tels que les digues.

Bien entendu, l'invention n'est aucunement limitée aux modes de réalisation ci-dessus. Elle s'étend aux modes de réalisation équivalents, que l'homme du métier pourra notamment réaliser sur la base de ses connaissances générales voire par des opérations de routine. Par exemple, l'élément élastique du dispositif de récupération selon l'invention peut comprendre des ressorts. L'énergie sera alors emmagasinée par lesdits ressorts, lors des oscillations de la partie oscillante. Les moyens de transformation de l'énergie récupérée peuvent être quelconques.

On notera que, dans l'application dans laquelle on récupère l'énergie de la houle, l'énergie de cette houle est nécessairement atténuée ou amortie.

## Revendications

1. Installation pour l'amortissement et/ou la récupération de l'énergie de la houle, **caractérisée en ce qu'**elle comprend un dispositif (10) positionné à une profondeur donnée dans un milieu marin, devant un ouvrage (30) apte à réfléchir une houle incidente (31) et ainsi former une houle réfléchie (32), la superposition desdites houles incidente et réfléchie formant un clapotis, ledit dispositif (10) comportant une partie oscillante (13) apte à osciller en fonction des variations de pression induites par ledit clapotis, ladite partie oscillante (13) étant positionnée dans une zone d'influence dudit clapotis.

2. Installation selon la revendication 1,
**caractérisée en ce que** la partie oscillante (13) du dispositif (10) comprend un plateau oscillant en translation verticale et **en ce que** l'élément élastique est un gaz tel que de l'air sensiblement en équipression avec la pression du milieu marin à la profondeur à laquelle est positionnée le dispositif (10).

3. Installation selon l'une des revendications 1 ou 2, **caractérisée en ce que** l'ouvrage (30) est un ouvrage côtier et **en ce que** le dispositif (10) est positionné à proximité dudit ouvrage (30), au fond (20) de la mer.

4. Installation selon l'une des revendications précédentes, **caractérisée en ce que** le dispositif (10) comporte en outre une partie fixe (12), ladite partie fixe (12) et la partie oscillante (13) formant une cuve (17) contenant un corps présentant des propriétés élastiques et étant apte à se déformer en fonction des oscillations de la partie oscillante (13) du dispositif (10), sous l'effet des variations de pression induites par le clapotis.

5. Installation selon l'une des revendications précédentes, **caractérisée en ce que** le dispositif (10) est un dispositif de récupération de l'énergie de la houle et **en ce que** ladite installation comporte en outre un dispositif de transformation de l'énergie récupérée par ledit dispositif (10) de récupération.

6. Installation selon la revendication 5,
**caractérisée en ce que** le dispositif de transformation de l'énergie comprend un moteur linéaire.

7. Installation selon l'une des revendications 1 à 4, **caractérisée en ce que** le dispositif (10) est un dispositif d'amortissement de l'énergie de la houle, et **en ce que** la partie oscillante (13) de ce dispositif (10) est laissée libre mécaniquement, sans qu'un moyen de freinage quelconque lui soit imposé.

8. Procédé pour l'amortissement et/ou la récupération de l'énergie de la houle, **caractérisé en ce qu'**il comporte des étapes de :
positionnement d'un dispositif (10) à une profondeur donnée dans un milieu marin et devant un ouvrage (30) apte à réfléchir une houle incidente (31) ;
réflexion de la houle incidente (31) par l'ouvrage (30) de manière à former une houle réfléchie (32), la superposition desdites houle incidente (31) et réfléchie (32) formant un clapotis ;
positionnement d'une partie oscillante (13) du dispositif (10) dans une zone d'influence du clapotis ; et de
oscillation de ladite partie oscillante (13) du dispositif (10) en fonction des variations de pression induites par ledit clapotis.

9. Utilisation d'une installation selon l'une des revendications 1 à 7, pour l'amortissement et/ou la récupération de l'énergie formée par un clapotis généré par la réflexion d'une houle incidente (31) sur un ouvrage (30).

## Claims

1. Plant for damping and/or recovering the energy of the swell, **characterised in that** it comprises a device (10) positioned at a given depth in a sea environment, in front of a structure (30) capable of reflecting an incident swell (31) and thus forming a reflected swell (32), the superposition of said incident and reflected swells forming a swash, said device (10) including an oscillating part (13) capable of oscillating according to pressure variations induced by said swash, said oscillating part (13) being positioned in an area influenced by said swash.

2. Plant according to claim 1, **characterised in that** the oscillating part (13) of the device (10) comprises an oscillating plate in vertical translation and **in that** the elastic element is a gas such as air substantially in equi-pressure with the pressure of the sea environment at the depth at which is positioned the device (10).

3. Plant according to one of claims 1 or 2, **characterised in that** the structure (30) is a coastal structure and **in that** the device (10) is positioned in the vicinity of said structure (30), at the bottom (20) of the sea.

4. Plant according to one of the preceding claims,
**characterised in that** the device (10) further includes a fixed part (12), said fixed part (12) and the oscillating part (13) forming a tank (17) containing a body having elastic properties and capable of being deformed according to the oscillations of the oscillating part (13) of the device (10), under the effect of the pressure variations induced by the swash.

5. Plant according to one of the preceding claims,
**characterised in that** the device (10) is a device for recovering the energy of the swell and **in that** said plant further includes a device for transforming the energy recovered by said device (10) for recovering.

6. Plant according to claim 5, **characterised in that** the device for transforming the energy comprises a linear motor.

7. Plant according to one of claims 1 to 4, **characterised in that** the device (10) is a device for damping the energy of the swell, and **in that** the oscillating part (13) of this device (10) is left free mechanically, without any means of braking whatsoever imposed thereupon.

8. Method for the damping and/or recovering of the energy of the swell, **characterised in that** it includes the steps of:
positioning a device (10) at a given depth in a sea environment and in front of a structure (30) capable of reflecting an incident swell (31);
reflecting the incident swell (31) by the structure (30) in such a way as to form a reflected swell (32), the superposition of said incident (31) and reflected swells (32) forming a swash;
positioning of an oscillating part (13) of the device (10) in an area influenced by the swash; and of
oscillating of said oscillating part (13) of the device (10) according to the pressure variations induced by said swash.

9. Use of a plant according to one of claims 1 to 7, for damping and/or recovering the energy formed by a swash generated by the reflecting of an incident swell (31) on a structure (30).

## Patentansprüche

1. Anlage zum Auffangen und/oder Rückgewinnen der Wellenenergie, **dadurch gekennzeichnet, dass** sie eine Vorrichtung (10) umfasst, die in einer gegebenen Tiefe in einer Meeresumgebung vor einem Bauwerk (30) positioniert ist, das dazu geeignet ist, eine einfallende Welle (31) zu reflektieren und somit eine reflektierte Welle (32) zu bilden, wobei die Überlagerung der einfallenden und reflektierten Wellen eine Kabbelung bildet, wobei die Vorrichtung (10) einen schwingenden Teil (13) umfasst, der dazu geeignet ist, in Abhängigkeit von den Druckschwankungen zu schwingen, die durch die Kabbelung herbeigeführt werden, wobei der schwingende Teil (13) in einem Einflussbereich der Kabbelung positioniert ist.

2. Anlage nach Anspruch 1, **dadurch gekennzeichnet, dass** der schwingende Teil (13) der Vorrichtung (10) eine in Vertikaltranslation schwingende Platte umfasst, und dass das elastische Element ein Gas wie etwa Luft ist, das im Wesentlichen auf dem gleichen Druck liegt wie die Meeresumgebung in der Tiefe, in der die Vorrichtung (10) positioniert ist.

3. Anlage nach einem der Ansprüche 1 oder 2, **dadurch gekennzeichnet, dass** das Bauwerk (30) ein Küstenbauwerk ist, und dass die Vorrichtung (10) in der Nähe des Bauwerks (30) auf dem Meeresboden (20) positioniert ist.

4. Anlage nach einem der vorhergehenden Ansprüche, **dadurch gekennzeichnet, dass** die Vorrichtung (10) ferner einen feststehenden Teil (12) umfasst, wobei der feststehende Teil (12) und der schwingende Teil (13) einen Schacht (17) bilden, der einen Körper enthält, der elastische Eigenschaften aufweist und in der Lage ist, sich in Abhängigkeit von den Schwingungen des schwingenden Teils (13) der Vorrichtung (10) unter der Einwirkung der durch die Kabbelung herbeigeführten Druckschwankungen zu verformen.

5. Anlage nach einem der vorhergehenden Ansprüche, **dadurch gekennzeichnet, dass** die Vorrichtung (10) eine Vorrichtung zum Rückgewinnen der Wellenenergie ist, und dass die Anlage ferner eine Vorrichtung zum Umwandeln der Energie umfasst, die von der Rückgewinnungsvorrichtung (10) rückgewonnen wird.

6. Anlage nach Anspruch 5, **dadurch gekennzeichnet, dass** die Vorrichtung zum Umwandeln der Energie einen Linearmotor umfasst.

7. Anlage nach einem der Ansprüche 1 bis 4, **dadurch gekennzeichnet, dass** die Vorrichtung (10) eine Vorrichtung zum Auffangen der Wellenenergie ist, und dass der schwingende Teil (13) dieser Vorrichtung (10) mechanisch frei gelassen wird, ohne ihm irgendein Bremsmittel aufzuerlegen.

8. Verfahren zum Auffangen und/oder Rückgewinnen der Wellenenergie, **dadurch gekennzeichnet, dass** es folgende Schritte umfasst:
- Anordnen einer Vorrichtung (10) in einer gegebenen Tiefe in einer Meeresumgebung und vor einem Bauwerk (30), das in der Lage ist, eine einfallende Welle (31) zu reflektieren;
- Reflektieren der einfallenden Welle (31) durch das Bauwerk (30), um eine reflektierte Welle (32) zu bilden, wobei die Überlagerung der einfallenden (31) und reflektierten (32) Wellen eine Kabbelung bildet;
- Positionieren eines schwingenden Teils (13) der Vorrichtung (10) in einem Einflussbereich der Kabbelung; und
- in Schwingung Versetzen des schwingenden Teils (13) der Vorrichtung (10) in Abhängigkeit von den Druckschwankungen, die von der Kabbelung herbeigeführt werden.

9. Verwendung einer Anlage nach einem der Ansprüche 1 bis 7 zum Auffangen und/oder Rückgewinnen der Energie, die durch eine Kabbelung gebildet wird, die durch die Reflexion einer einfallenden Welle (31) an einem Bauwerk (30) erzeugt wird.
